# EUROPEAN PATENT APPLICATION

(11) **EP 4 559 754 A1**
(43) Date of publication of application: **28.05.2025**
(21) Application number: 24207294.0
(22) Date of filing: 17.10.2024
(51) Int. Cl.: B60Q 5/00

(54) **VEHICULAR NOTIFICATION APPARATUS**

(30) Priority: 21.11.2023 JP 2023197676
(71) Applicant: Suzuki Motor Corporation, Shizuoka 432-8611 (JP)
(72) Inventor: KASAMA, Keita, Hamamatsu-shi, 432-8611 (JP); YOSHIDA, Syun, Hamamatsu-shi, 432-8611 (JP); UEHARA, Kuniya, Hamamatsu-shi, 432-8611 (JP); KATO, Yoshiyuki, Hamamatsu-shi, 432-8611 (JP)
(74) Representative: Plasseraud IP

(57) **Abstract**

A vehicular notification apparatus (1) determines whether a vehicle is in at least one predetermined state, and perform auditory notification for prompting a driver of the vehicle to recognize that the vehicle is in the at least one predetermined state. The predetermined states include a plurality of types of mandatory notification states and at least one non-mandatory notification state different from the mandatory notification states. The notification apparatus (1) notifies that the vehicle is in the plurality of types of mandatory notification states, by using signal sounds that are different for each of the plurality of types of mandatory notification states, and when the vehicle is in two or more types of the mandatory notification states (S105), performs notification indicating that the vehicle is in the mandatory notification states, while stopping notification indicating that the vehicle is in the non-mandatory notification state (S113).

## Description

### BACKGROUND OF THE INVENTION

### Field of the Invention

The present invention relates to a vehicular notification apparatus (i.e., a notification apparatus of a vehicle).

### Description of the Related Art

In a known technique related to audible alarms, in the case of simultaneously notifying occurrence of a plurality of states belonging to different warning levels by using audible alarms corresponding to the different warning levels, only the audible alarm indicative of the occurrence of the state of a higher warning level is sounded and all the other audible alarms are silenced. This allows the driver to easily recognize the occurrence of the state of the higher warning level.

[Patent Document 1] JP 2007-128267 A

In this technique, however, even if a plurality of alarm-relevant states occur, only one audible alarm is actually sounded. Thus, when a plurality of states with different warning levels are mixed, this technique has a problem that the driver cannot recognize the occurrence of a state to be notified by using another audible alarm.

When a plurality of audible alarms corresponding to respective warning levels are sounded simultaneously, there is a concern that an audible alarm indicating occurrence of a state of a high warning level is buried in one or more audible alarms indicating occurrence of one or more states of lower warning level and this makes it difficult for the driver to recognize the occurrence of the state of the high warning level.

### SUMMARY OF THE INVENTION

In view of the above-described circumstances, an object of the present invention is to provide a vehicular notification apparatus that enables the driver to appropriately recognize notification regarding the state of the vehicle.

To solve the above-mentioned problem, in one aspect of the present invention, a vehicular notification apparatus includes: a vehicle state determination unit configured to determine whether a vehicle is in at least one predetermined state or not; and a notification unit configured to perform auditory notification for prompting a driver of the vehicle to recognize that the vehicle is in the at least one predetermined state, when the vehicle state determination unit determines that the vehicle is in the at least one predetermined state. The at least one predetermined state includes a plurality of types of mandatory notification states and at least one non-mandatory notification state different from the mandatory notification states. The notification unit is configured to notify that the vehicle is in the plurality of types of mandatory notification states, by using signal sounds that are different for each of the plurality of types of mandatory notification states, and when the vehicle is in two or more types of the mandatory notification states, the notification unit performs notification indicating that the vehicle is in the mandatory notification states, while stopping notification indicating that the vehicle is in the non-mandatory notification state.

The mandatory notification states may be set by being classified into at least two importance levels in each of the plurality of types.

When the vehicle is in two or more types of the mandatory notification states and the importance levels of the two or more mandatory notification states are high, the notification unit preferably stops notification indicating that the vehicle is in the non-mandatory notification state.

The notification unit may change the type of at least one non-mandatory notification state to be notified in accordance with the types of the mandatory notification states having a high importance level. The notification unit may more increase number of the at least one non-mandatory notification state to be notified as number of types of the mandatory notification states having a high importance level is lower.

The notification unit may notify that the vehicle is in the mandatory notification states, by using signal sounds that are different for each of importance levels in each of the plurality of types.

When the vehicle is in a plurality of mandatory notification states belonging to the same type, the notification unit may notify that the vehicle is in the mandatory notification states, by using a signal sound that is set for the mandatory notification state having a highest importance level among the plurality of mandatory notification states belonging to the same type.

The vehicle state determination unit may determine that the vehicle is in at least one predetermined audio notification state in addition to the at least one predetermined state. In this case, when the vehicle state determination unit determines that the vehicle is in the audio notification state, the notification unit may notify the driver by audible sound that the vehicle is in the audio notification state. When the vehicle is in two or more mandatory notification states or when the vehicle is in a plurality of states including both the mandatory notification state and the non-mandatory notification state, the notification unit preferably stops notification by audible sound.

The at least one predetermined audio notification state may include a plurality of states to be notified by using respective audible sounds different in content from each other. In this case, the notification unit may prohibit notification indicating that the vehicle is in the audio notification states, when the vehicle is in two or more of the audio notification states.

The audio notification states may include a first audio notification state and a second audio notification state as the plurality of states. In this case, when the vehicle state determination unit determines that the vehicle is in the second audio notification state during execution of notification indicating that the vehicle is in the first audio notification state, the notification unit may stop the notification indicating that the vehicle is in the first audio notification state, and start notification indicating that the vehicle is in the second audio notification state.

In a case of executing the notification by audible sound, the notification unit preferably lowers sound pressure of the audible sound than sound pressure of the signal sound.

The mandatory notification states may include a first type of state related to a situation in front of the vehicle, a second type of state related to a situation on a side of the vehicle, a third type of state related to the driver, and a fourth type of state related to a traveling speed of the vehicle. In this case, the notification unit preferably notifies the first to fourth types of states by using signal sounds that are different for each of the first to fourth types.

### EFFECT OF THE INVENTION

According to one aspect of the present invention, when a vehicle is in two or more types of mandatory notification states, a signal sound is issued for each of these two or more types of mandatory notification states, and notification indicating that the vehicle is in a non-mandatory notification state is stopped. This control enables the driver to readily recognize that the vehicle is in the mandatory notification state, i.e., that the vehicle is in the state of a high importance level or high priority requiring the driver's recognition.

### BRIEF DESCRIPTION OF THE DRAWINGS

In the accompanying drawings:
Fig. 1 is a schematic diagram illustrating a configuration of a vehicular notification apparatus according to one embodiment of the present invention;
Fig. 2 is a schematic diagram illustrating an internal configuration of a controller of the notification apparatus;
Fig. 3 is a flowchart illustrating an overall flow of a control (i.e., notification control) to be performed by the controller regarding the notification of states;
Fig. 4 is a flowchart illustrating contents of signal-sound allocation processing in the notification control;
Fig. 5 is another flowchart illustrating contents of the signal-sound allocation processing in the notification control, focusing on the portion A in Fig. 4;
Fig. 6 is a flowchart illustrating contents of audible-sound allocation processing in the notification control; and
Fig. 7 is a schematic table illustrating classification of mandatory notification states and non-mandatory notification states.

### DETAILED DESCRIPTION

Hereinbelow, embodiments of the present invention will be described by referring to the accompanying drawings.

### (Configuration of Notification Apparatus)

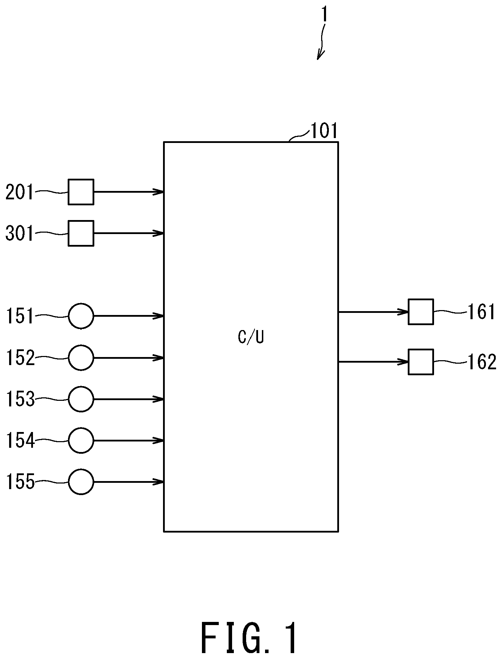

Fig. 1 is a schematic diagram illustrating a configuration of a vehicular notification apparatus 1 (hereinafter abbreviated as the notification apparatus 1) according to one embodiment of the present invention.

The notification apparatus 1 includes a controller 101, a vehicle speed sensor 151, a forward sonar sensor 152, a seat belt switch 153, a shift position sensor 154, a direction indicator 155, an alarm 161, and a sound generator 162, as main components of the present embodiment. The vehicle according to the present embodiment includes an advanced emergency brake (AEB) controller 201 and a lane keep assist (LKA) controller 301 in addition to the controller 101 of the notification apparatus 1. The controller 101 can communicate with the AEB controller 201 and the LKA controller 301. In the present embodiment, in addition to the controller 101, the AEB controller 201 and the LKA controller 301 are included in the components of the notification apparatus 1.

The controller 101 constitutes a calculation unit of the notification apparatus 1. The controller 101 receives output signals from various sensors constituting a detection unit of the notification apparatus 1, such as the vehicle speed sensor 151, and performs predetermined calculations related to a notification control. The controller 101 generates command signals in accordance with the result of the calculation, and outputs the command signals to the alarm 161 and the sound generator 162 described below.

The vehicle speed sensor 151 detects a running velocity of the own vehicle, i.e., vehicle speed. The vehicle speed can be detected by detecting a rotational speed of wheels (e.g., the left and right rear wheels that are driven wheels) and converting the rotational speed of the wheels into the distance traveled per unit time with the use of vehicular parameters such as a dynamic radius of the tire. Hereafter, the rotational speed of the wheels is referred to as "the wheel speed". Not limited to the above-described detection method, the vehicle speed can also be detected by converting the rotational speed of the vehicular driving source such as an internal combustion engine with the use of vehicular parameters such as a gear ratio and the dynamic radius of the tire.

The forward sonar sensor 152 is installed on, for example, a front bumper of the vehicle so as to be able to emit ultrasonic waves toward the front of the vehicle. The forward sonar sensor 152 receives a reflected wave of the emitted ultrasonic wave, and detects the direction of the ultrasonic wave, i.e., presence of an obstacle in front of the vehicle and the distance from the vehicle to the obstacle. When an obstacle is present within the irradiation range of the ultrasonic wave, the forward sonar sensor 152 notifies the controller 101 of the presence of the obstacle and the distance from the vehicle to the obstacle. Detection targets to be detected by the forward sonar sensor 152 include another vehicle traveling in front of the own vehicle, a pedestrian crossing the road in front of the own vehicle, and an installed object placed on the road in front of the own vehicle, for example.

When the vehicle is traveling in a state where at least one of the driver and passengers has not fastened the seat belt, the seat belt switch 153 notifies the controller 101 of non-use of the seat belt. Hereinafter, each of the driver and the passengers is referred to as a "vehicle occupant" in a superordinate concept. In the present embodiment, non-use of the seat belt is detected and notified for each seat. Specifically, occupancy sensors (not shown) are installed on the respective seats. During traveling of the vehicle, if the seat belt switch 153 detects non-use of the seat belt of a seat where a vehicle occupant is determined to be seated by the occupancy sensor, non-use of the seat belt of this seat is notified.

The shift position sensor 154 detects the shift position or gear range of the vehicle. In the present embodiment, the vehicle has a drive (D) range, a parking (P) range, a neutral (N) range, and a reverse (R) range, and is set to the D range during forward running. The vehicle is set to the P range during parking and is set to the R during range during reverse running. In the N range, the transmission of power between the drive source and the drive wheels (for example, the left and right front wheels) is cut off. In the case of detecting that the gear range of the vehicle is in the R range, the shift position sensor 154 notifies the controller 101 that the vehicle is in the R range.

The direction indicator 155 is a device configured to notify the surrounding (e.g., other vehicles) of the latest or changed traveling direction when the own vehicle changes its course such as right turn, left turn, and changing lanes. The direction indicator 155 includes two indicator lamps located on the respective right and left sides of the vehicle. When the vehicle changes its course, the direction indicator 155 flashes either lamp that corresponds to the changed course so as to indicate the changed traveling direction. At that time, the direction indicator 155 outputs a signal, which indicates that the direction indicator 155 is in operation, to the controller 101. In the present embodiment, the direction indicator 155 operates as a hazard light by flashing all the lamps in an emergency. Also in this case, the direction indicator 155 notifies the controller 101 that it is in operation.

When the vehicle is determined to be in a predetermined state from the output signals of various sensors such as the vehicle speed sensor 151, the alarm 161 generates a signal sound in accordance with this state so as to prompt the driver to recognize occurrence of this state in the vehicle. Of the states that needs to be recognized by the driver with a high importance level or high priority (i.e., high degree of relative priority), each state that is legally required to be notified is referred to as a "mandatory notification state", and the other states are referred to as "non-mandatory notification states" in the present embodiment. Both the mandatory notification states and the non-mandatory notification states are the subjects of notification by signal sound. In the present embodiment, if a plurality of states among the mandatory notification states and the non-mandatory notification states occur simultaneously, the alarm 161 selects the state(s) to be actually notified on the basis of the rules and order described below, and generates a signal sound based on the selected state. The combination of the alarm 161 and the sound generator 162 described below constitutes an output unit of the notification apparatus 1.

The sound generator 162 outputs audible-sound guidance (i.e., guidance using an audible sound such as a message sound) so as to notify the driver of occurrence of a state that is relatively low in importance level or priority in terms of requiring recognition by the driver. In other words, the sound generator 162 uses the audible-sound guidance to notify occurrence of a state that is lower in importance level or priority in terms of requiring recognition by the driver as compared with a notification target to be notified by signal sound, or specifically, the mandatory notification states and the non-mandatory notification states. The information to be provided by the audible-sound guidance include: information related to route guidance provided by a navigation system; and road traffic information that can be obtained via a VICS (registered trademark), for example. The state to be notified through the audible-sound guidance is hereinafter referred to as "the audio notification state". For example, aspects of the audio notification state include a state where the vehicle is at an intersection on the planned route and should turn right at the intersection.

When the vehicle is close to obstacles in front of or behind the vehicle and there is a possibility of collision between the vehicle and these obstacles, the AEB controller 201 activates an advanced emergency brake (i.e., collision damage mitigation brake) to forcibly apply braking force without the driver's brake operation, and thereby aims to avoid the collision or mitigate the damage in the case of the collision. For example, when the inter-vehicular distance between the own vehicle and a preceding vehicle (i.e., another vehicle traveling ahead of the own vehicle) becomes extremely short during forward running of the own vehicle and the collision prediction time of the own vehicle with respect to the preceding vehicle becomes shorter than a predetermined time length, the AEB controller 201 activates the advanced emergency brake. At this time, the AEB controller 201 notifies the controller 101 that the advanced emergency brake is in operation.

The LKA controller 301 assists or supports the driver's steering by automatically controlling the electric power steering device in such a manner that the vehicle stays in the center of the lane in which the vehicle is currently traveling. In association with this control, when the driver is not holding the steering wheel to be handled by the driver, the LKA controller 301 is configured to be able to detect this state. If such a state continues for a predetermined period of time, the LKA controller 301 notifies the controller 101 that the steering wheel is in a released state.

### (Internal Configuration of Controller)

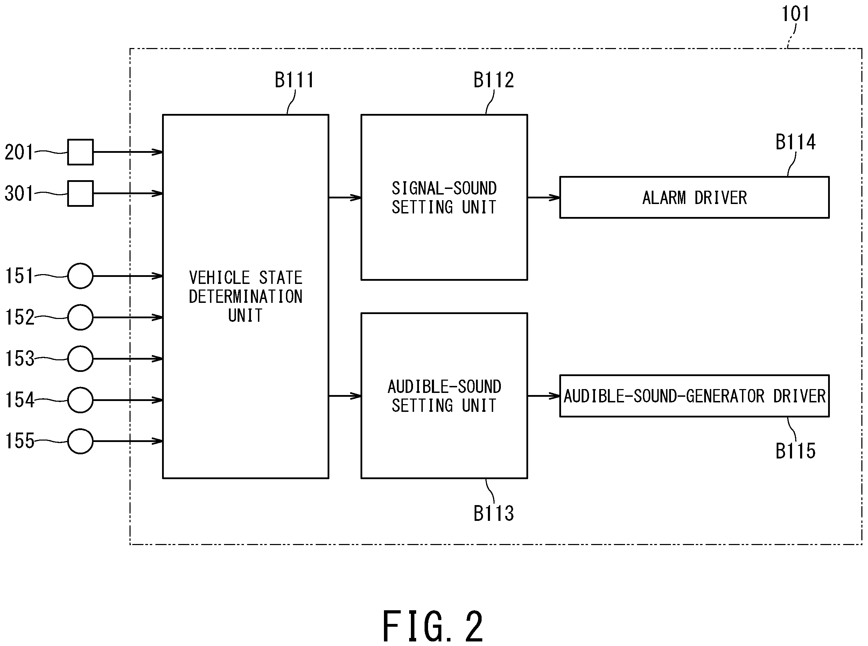

Fig. 2 is a schematic diagram illustrating an internal configuration of the controller 101.

In the present embodiment, the controller 101 is configured as an electronic control unit using a microcomputer that includes a central processing unit (CPU), an input/output interface, and a storage unit, as exemplified by a ROM and a RAM.

In the present embodiment as described above, the mandatory notification state, the non-mandatory notification state, and the audio notification state are targets of notification. When the vehicle is in one or more of these three types of states, a signal sound or audible sound that is preset for each state and prestored in the controller 101 is generated to prompt the driver to recognize that the vehicle is in that state.

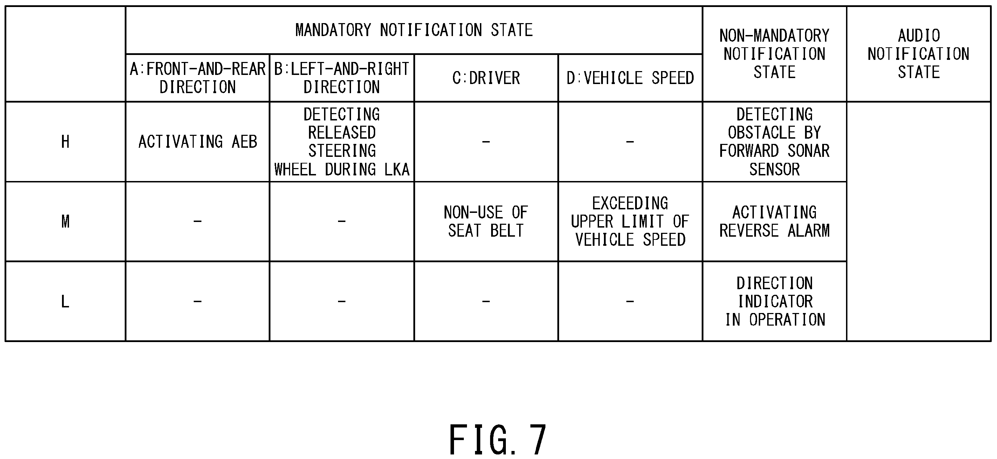

Fig. 7 is a schematic table illustrating classification of the mandatory notification states and the non-mandatory notification states.

In the present embodiment, notification targets to be notified by signal sound are roughly divided into the mandatory notification states and the non-mandatory notification states, and each of these states is classified into a plurality (three in the present embodiment) of stages H, M, L depending on their importance level. In other words, in addition to the attribute of legally required notification or non-compulsory notification, attributes in accordance with the importance level H, M, or L are allocated to the notification targets to be notified by signal sound.

The importance level H (high) indicates that the importance level to be recognized by the driver is particularly high. Among the warning targets, collision-related states are classified into the importance level H.

The importance level M (medium) indicates that the importance level to be recognized by the driver is relatively high. Among the warning targets, all the states other than those classified as the importance level H are classified into the importance level M.

The importance level L (low) indicates that such an importance level is low, and all the states other than the warning targets are classified into the importance level L. The states to be classified into the importance level L include: a state where a device to be operated by the driver (e.g., the direction indicator 155) is in operation; and a state that is simply announced for the purpose of informing the driver, for example.

The classification based on the importance level is not limited to three levels but may be two levels of high and low or four or more levels, for example. The classification based on the importance level H, M, or L is not applied to the audio notification states, and all of the audio notification states described above are treated as the states that are the same in terms of importance level.

The mandatory notification states are classified into a plurality (four in the present embodiment) of types A to D depending on their properties, and each of the plurality of mandatory notification states belongs to one of the types A to D.

The mandatory notification states related to the situation in front of or behind the vehicle are classified into the type A. The mandatory notification states related to the situation on the side of the vehicle are classified into the type B. The mandatory notification states related to the driver are classified into the type C. The mandatory notification state related to the traveling speed of the vehicle are classified into the type D.

In the present embodiment, the state where the advanced emergency brake is in operation is classified as the mandatory notification state that belongs to the type A and has the importance level H.

The state where the steering wheel is released (i.e., not gripped or handled) during operation of the Lane Keep Assist (LKA) is classified as the mandatory notification state that belongs to the type B and has the importance level H.

The state where the vehicle is traveling with the seat belt unused or unfastened is classified as the mandatory notification state that belongs to the type C and has the importance level M.

The state where the vehicle speed exceeds the upper limit (e.g., the designated maximum speed or legal speed limit) is classified as the mandatory notification state that belongs to the type D and has the importance level M. The designated maximum speed is the maximum speed specified by road signs, for example, and is also called the speed limit. The legal speed limit is the maximum speed stipulated by law.

As to the present embodiment, each state belonging to the type A corresponds to a "first type of state", each state belonging to the type B corresponds to a "second type of state", each state belonging to the type C corresponds to a "third type of state", and each state belonging to the type D corresponds to a "fourth type of state".

The classification based on the type is not applied to the non-mandatory notification states, and only the classification based on the importance level H, M, or L is applied to the non-mandatory notification states. For example, the state where presence of an obstacle in front of the vehicle is detected by the forward sonar sensor 152 is classified as the non-mandatory notification state having the importance level H. The state where the reverse alarm is activated (i.e., the traveling direction of the vehicle is reverse) is classified as the non-mandatory notification state having the importance level M. The state where the direction indicator 155 is in operation is classified as the non-mandatory notification state having the importance level L. As described above, the state where the direction indicator 155 is in operation includes not only the case of changing its course but also the case where the direction indicator 155 is in operation as a hazard light.

When two or more of the mandatory notification states, the non-mandatory notification states, and the audio notification states occur simultaneously in the vehicle, notification is performed in accordance with the following rules and order.
(a) Regarding the mandatory notification states and the non-mandatory notification states, the maximum number of signal sounds to be generated simultaneously is four. In other words, of the mandatory notification states and the non-mandatory notification states, the maximum number of states to be notified simultaneously by signal sound is four.
(b) When the number of the mandatory notification states to be actually notified is less than four, notification of the non-mandatory notification state(s) or the audio notification state(s) is performed.
(c) Notification of the mandatory notification state(s) is performed by signal sound for the state of the highest importance level H, M, or L in each of the types A to D.
(d) After allocation of signal sounds for the mandatory notification states, additional signal sounds are allocated in accordance with the importance level H, M, or L, under both conditions that the following conditions d1, d2, and d3 are satisfied and the total number of signal sounds does not exceed four.
   (d1) The addition of a signal sound for the state having the importance level H is performed in such a manner that the total number of signal sounds including the signal sounds having already been allocated to the mandatory notification states does not exceed two after the addition.
   (d2) The addition of a signal sound for the state having the importance level M is permitted up to an upper limit of one when there is no allocation for the state(s) having the importance level H.
   (d3) The addition of a signal sound for the state having the importance level L is permitted up to an upper limit of one when there are no allocations for both the state(s) having the importance H level and the state(s) having the importance level M.
(e) When the number of signal sounds allocated to the mandatory notification state(s) and the non-mandatory notification state(s) is zero or only one and there is only one audio notification state to be notified by audible sound, the audible sound is allocated to this audio notification state.

As shown in Fig. 2, the vehicle state determination unit Bill determines the state of the vehicle on the basis of the output information items from various sensors, such as the vehicle speed sensor 151.

When the vehicle is in the mandatory notification state or the non-mandatory notification state, the signal-sound setting unit B112 sets allocation of signal sounds for these states on the basis of the above-described rules and order.

When the vehicle is in the audio notification state, the audible-sound setting unit B113 sets allocation of an audible sound for the audio notification state on the basis of the above-described rules.

The alarm driver B114 outputs a drive signal for generating a signal sound to the alarm 161. In the present embodiment, the signal sounds for the respective states to be notified are synthesized and sounded by the single alarm 161.

The audible-sound-generator driver B115 outputs a drive signal for generating an audible sound to the sound generator 162.

### (Contents of Notification Control)

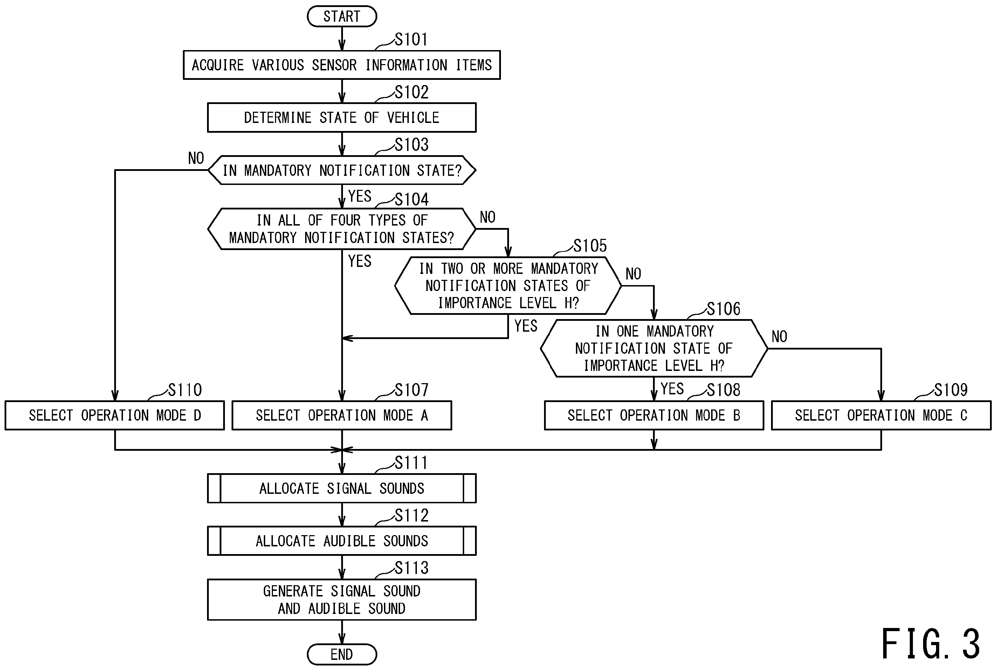

Fig. 3 is a flowchart illustrating an overall flow of the control to be performed regarding notification of the states (hereinafter referred to as "the notification control").

In the present embodiment, the notification control is performed by the controller 101 at predetermined time intervals after powering on the vehicle.

In the step S101, various sensor information items such as output information from the vehicle speed sensor 151 are acquired.

In the step S102, the state of the vehicle is determined on the basis of the information acquired in the step S101. In other words, it is determined whether the vehicle is in the mandatory notification state, the non-mandatory notification state, or the audio notification state. In the present embodiment, it is determined whether the vehicle is in one or more of the states shown in Fig. 7, such as: a state where the advanced emergency brake is activated; a state where the vehicle is traveling in a state with the seat belt(s) unused or unfastened; and a state where presence of an obstacle in front of the vehicle is detected by the forward sonar sensor 152.

In the step S103, it is determined whether the vehicle is in the mandatory notification state or not. Specifically, it is determined whether the vehicle is in one or more of the mandatory notification states of the types A to D. If the vehicle is in the plurality of mandatory notification states that are of the same type and different in importance level (H, M, and L) from each other, the one with the highest importance level is selected as the mandatory notification state for each type. Hence, in the present embodiment, the mandatory notification states to be determined as the state of the vehicle are up to four or four types. If the vehicle is in at least one mandatory notification state, the processing proceeds to the step S104. If the vehicle is not in the mandatory notification state, the processing proceeds to the step S110.

In the step S104, it is determined whether there are four types of the mandatory notification states, i.e., it is determined whether the vehicle is in all of the four types A to D of mandatory notification states or not. If the vehicle is in the four types of mandatory notification states, the processing proceeds to the step S107. Otherwise, i.e., if the vehicle is in one, two, or three types of the mandatory notification state(s), the processing proceeds to the step S105.

In the step S105, it is determined whether or not there are two or more types of mandatory notification states having the importance level H that the vehicle corresponds to. In other words, it is determined whether the vehicle is in two or more types of mandatory notification states having the importance level H or not. If the vehicle is in two or more types of mandatory notification states having the importance level H, specifically, if the number of types of the mandatory notification states is two or three and there are two or more types of mandatory notification states having the importance level H, the processing proceeds to the step S107. Otherwise, the processing proceeds to the step S106. Specifically, if the vehicle is in only one type of the mandatory notification state, the processing proceeds to the step S106. If the vehicle is in two or three types of the mandatory notification states but the number of states having the importance level H among these mandatory notification states is one or less, the processing also proceeds to the step S106.

In the step S106, it is determined whether the vehicle is in one mandatory notification state having the importance level H or not. In other words, it is determined whether there is only one type of the mandatory notification state having the importance level H or the mandatory notification state having the importance level H does not exist. If the vehicle is in only one mandatory notification state having the importance level H, the processing proceeds to the step S108. Otherwise, i.e., if the vehicle is not in any mandatory notification state having the importance level H, the processing proceeds to the step S109.

In the step S107, an operation mode A is selected as the operation mode of the alarm 161.

In the step S108, an operation mode B is selected as the operation mode of the alarm 161.

In the step S109, an operation mode C is selected as the operation mode of the alarm 161.

In the step S110, an operation mode D is selected as the operation mode of the alarm 161.

In the step Sill, allocation of signal sounds for the mandatory notification state(s) and the non-mandatory notification state(s) is set.

In the step S112, allocation of audible sounds for the audio notification state(s) is set.

In the step S113, the alarm 161 and the sound generator 162 are activated on the basis of the allocation of the signal sounds and audible sounds, and notification of the state(s) with respect to the driver is executed.

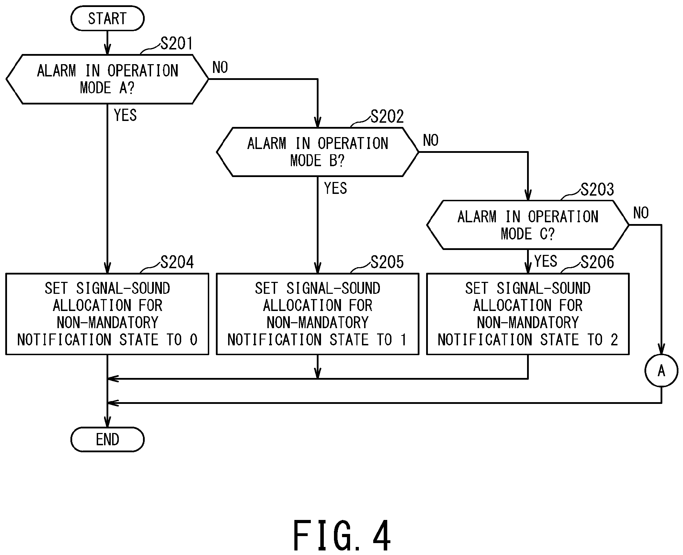

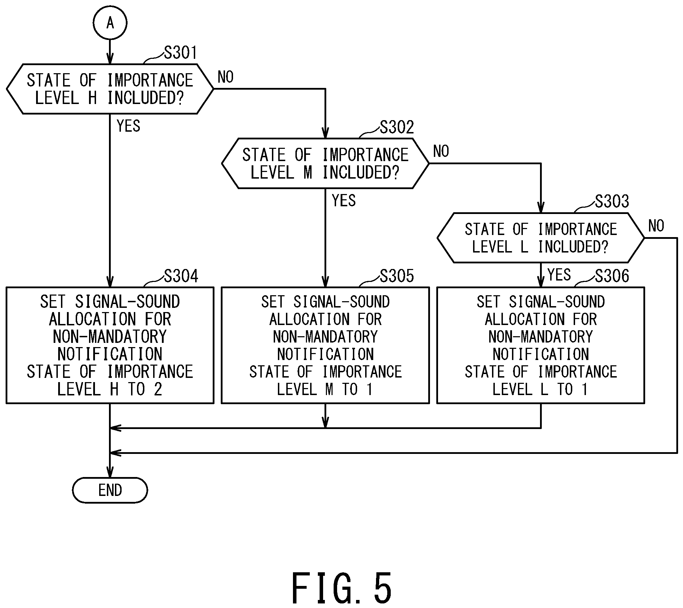

Fig. 4 and Fig. 5 are flowcharts illustrating contents of the signal-sound allocation processing in the notification control (i.e., the step Sill in the flowchart of Fig. 3). Fig. 5 is a flowchart illustrating details of the portion A in Fig. 4 in the signal-sound allocation processing of the notification control.

In the flowchart of Fig. 4, in the step S201, it is determined whether the alarm 161 is in the operation mode A or not. If the alarm 161 is in the operation mode A, the processing proceeds to the step S204. If the alarm 161 is not in the operation mode A, the processing proceeds to the step S202.

In the step S202, it is determined whether the alarm 161 is in the operation mode B or not. If the alarm 161 is in the operation mode B, the processing proceeds to the step S205. If the alarm 161 is not in the operation mode B, the processing proceeds to the step S203.

In the step S203, it is determined whether the alarm 161 is in the operation mode C or not. If the alarm 161 is in the operation mode C, the processing proceeds to the step S206. If the alarm 161 is not in the operation mode C, the processing proceeds to the step S301 in the flowchart of Fig. 5.

In the step S204, allocation of the signal sounds for the non-mandatory notification states is set to 0 (i.e., zero sound). If the vehicle is in all of the types A to D of the mandatory notification states or if the vehicle is in two or three types of the mandatory notification states and two or more of those mandatory notification states have the importance level H, the allocation of the signal sounds for the non-mandatory notification states is set to 0. Regardless of whether the vehicle is in at least one non-mandatory notification state or not, notification indicating that the vehicle is in the non-mandatory notification state(s) is stopped in this manner, which contributes to suppression of a situation where the signal sound indicating the non-mandatory notification state prevents notification of the mandatory notification state.

In the step S205, allocation of the signal sounds for the non-mandatory notification states is set to 1 (i.e., one sound). If the vehicle is in one, two, or three types of mandatory notification state(s) and only one of those mandatory notification states has the importance level H, regardless of the type and number of the mandatory notification states having the importance level M or L, the allocation of the signal sounds for the non-mandatory notification state having the highest importance level H is set to 1. This setting avoids a situation where the signal sound indicating the non-mandatory notification state excessively interferes with the notification of the mandatory notification state.

In the step S206, allocation of the signal sounds for the non-mandatory notification states is set to 2 (i.e., two sounds). If the vehicle is in one to three types of the mandatory notification states without including any mandatory notification state having the importance level H, the allocation of the signal sounds for the non-mandatory notification state(s) having the highest importance level H is set to 2. Since each mandatory notification state having the importance level M or L is not a state directly related to collision but is a warning with an aspect of calling attention, the controller 101 permits a plurality of signal sounds indicating that the vehicle is in the non-mandatory notification states. If there is only one non-mandatory notification state having the importance level H, instead of the above setting, allocation may be set for one non-mandatory notification state having a relatively high importance level M or L in addition to one non-mandatory notification state having the importance level H, so that the respective non-mandatory notification states occurring in the vehicle are notified by using signal sounds different from each other.

In the flowchart of Fig. 5, the controller 101 sets allocation of the signal sounds for the non-mandatory notification states for the case where the alarm 161 is in the operation mode D, i.e., the case where the vehicle is not in the mandatory notification state.

In the step S301, it is determined whether the non-mandatory notification states determined in the step S102 include the state having the highest importance level H or note. If the non-mandatory notification state having the importance level H exists, the processing proceeds to the step S304. Otherwise, the processing proceeds to the step S302.

In the step S302, it is determined whether the state having the relatively high importance level M is included in the determined non-mandatory notification state(s) or not. If the non-mandatory notification state having the importance level M exists, the processing proceeds to the step S305. Otherwise, the processing proceeds to the step S303.

In the step S303, it is determined whether the state having the low importance level L is included in the determined non-mandatory notification state(s) or not. If the non-mandatory notification state having the importance level L exists, i.e., if the non-mandatory notification state having the importance level H or M does not exist and all the determined non-mandatory notification states have the low importance level L, the processing proceeds to the step S306. Otherwise, it is determined that the vehicle is not in the non-mandatory notification state and the processing proceeds to the step S112 in the flowchart of Fig. 3.

In the step S304, allocation of the signal sounds for the non-mandatory notification states having the importance level H is set to a maximum of 2 (i.e., two sounds).

In the step S305, allocation of the signal sounds for the non-mandatory notification states having the importance level M is set to 1 (i.e., one sound).

In the step S306, the allocation of the signal sounds only for the non-mandatory notification states having the importance level L is set to 1 (i.e., one sound).

A plurality of non-mandatory notification states different in priority for each of the importance levels H, M, and L can be set. Under such setting of the non-mandatory notification states, a signal sound may be preferentially allocated to the non-mandatory notification state having the highest priority for each of the importance levels H, M, and L.

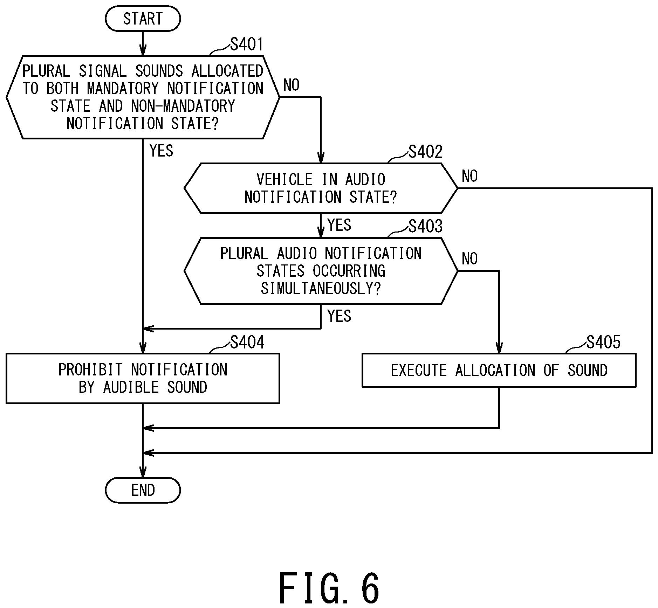

Fig. 6 is a flowchart illustrating contents of the audible-sound allocation processing in the notification control.

In the step S401, it is determined whether a total of two or more signal sounds are allocated to both the mandatory notification state(s) and the non-mandatory notification state(s) or not. If two or more signal sounds are allocated to both in total, the processing proceed to the step S404. Otherwise, the processing proceeds to the step S402.

In the step S402, it is determined if the vehicle is in at least one audio notification state or not. If the vehicle is in at least one audio notification state, the processing proceeds to the step S403. Otherwise, the audible-sound allocation processing is completed and the processing proceeds to the step S113 in the flowchart of Fig. 3.

In the step S403, it is determined whether the audio notification states determined in the step S402 is two or more. In other words, it is determined whether a plurality of audio notification states are occurring simultaneously in the vehicle or not. If the vehicle is in the plurality of audio notification states, the processing proceeds to the step S404. If the number of the audio notification states occurring in the vehicle is one, the processing proceeds to the step S405.

In the step S404, the controller 101 prohibits notification by audible sound indicating that the vehicle is in the audio notification state. If there are two or more states to be notified by signal sound (i.e., the mandatory notification state(s) and the non-mandatory notification state(s)), in order to prioritize the driver's recognition that the vehicle is in these states and ensure this recognition, audible-sound notification having a possibility of interfering with this recognition is prohibited. If a plurality of audio notification states occur simultaneously in the vehicle, simultaneous executions of notification by using a plurality of audible sounds with meaningful contents makes it difficult for the driver to hear the information from each audible sound, and thus, notification of the audio notification states to be treated equally in term of importance level is prohibited.

In the step S405, allocation of the audible sounds is executed.

### (Advantages and Effects)

The vehicular notification apparatus 1 according to the present embodiment has the above-described configuration. The effects to be obtained by the present embodiment will be described below.

Firstly, if the vehicle is in two or more types of mandatory notification states, i.e., if the conditions for the vehicle to be in the mandatory notification state are satisfied for two or more types of mandatory notification states simultaneously, the notification by signal sound is performed for each of these two or more types of mandatory notification states, whereas the notification indicating that the vehicle is in the non-mandatory notification state is stopped.

This control enables the driver to readily recognize that the vehicle is in the mandatory notification state(s), i.e., in the state of requiring the driver's recognition with a high importance level or high priority.

Secondly, if the vehicle is in two or more types of mandatory notification states and the importance level of each of these two or more mandatory notification states is high, the notification indicating that the vehicle is in the non-mandatory notification state is stopped. This control allows the driver to easily recognize that the vehicle is in the mandatory notification state(s), especially when the vehicle is in the mandatory notification state having a high importance level, and the notification indicating that the vehicle is in the non-mandatory notification state(s) is performed as much as possible within a permissible range, which allows the driver to more accurately recognize the state having occurred in the vehicle.

Thirdly, the number of non-mandatory notification states to be notified is more increased as the number of types of mandatory notification states having the high importance level is lower. In the present embodiment, if the state having the importance level H is not included in the mandatory notification state(s) occurring in the vehicle (i.e., the operation mode C in the step S206), the allocation of the signal sounds for the non-mandatory notification states is increased more than a case where there is only one type of mandatory notification state having the importance level H (i.e., the operation mode B in the step S205). This control enables the driver to recognize that more of the non-mandatory notification states are occurring in the vehicle, and can prompt the driver to more accurately recognize the states occurring in the vehicle.

Fourthly, notification by audible sound is issued when the vehicle is in the audio notification state, and this control enables the driver to readily recognize that the vehicle is in the audio notification state, through the notification by audible sound. Further, if the vehicle is in two or more types of mandatory notification states or if the vehicle is in a plurality of states including both the mandatory notification state and the non-mandatory notification state, the notification by audible sound is stopped, and this control can suppress a situation where the notification by audible sound prevents the driver from recognizing that the vehicle is in the mandatory notification state or the non-mandatory notification state.

Fifthly, the audio notification state is prohibited when the vehicle is in two or more of the audio notification states, and this control can suppress a situation where plural executions of audible-sound notification indicative of the vehicle being in the audio notification states prevent the driver from recognizing that the vehicle is in the mandatory notification state or the non-mandatory notification state.

Further, the above-described control can reduce the burden to be caused by a plurality of simultaneous executions of audible-sound notification requiring a relatively large capacity, and thus, can secure capacity to be used for the notification indicating that the vehicle is in the non-mandatory notification state or the mandatory notification state having a higher importance level.

In the case of using notification by audible sound, the sound pressure of the audible sound is lowered than that of the signal sound at the time of notifying that the vehicle is in the mandatory notification state or the non-mandatory notification state. This sound control makes the signal sound more noticeable and distinguishable from the audible sound, and enables the driver to more reliably recognize the notification by signal sound, i.e., that the vehicle is in the mandatory notification state or the non-mandatory notification state.

In the present embodiment as shown in Fig. 7, all the mandatory notification states belonging to the type A or B are the states having the importance level H, and none of the mandatory notification states belonging to the type A or B are set to the importance level M or L. Further, all the mandatory notification states belonging to the type C or D are the states having the importance level M, and none of the mandatory notification states belonging to the type C or D are set to the importance level H or L. Setting of the mandatory notification states is not limited to the above-described pattern, and the mandatory notification states matching the conditions can be set appropriately.

In other words, it is possible to set multiple or different levels H, M, L of importance of mandatory notification states for each or some of types A to D. The plurality of mandatory notification states belonging to the type A may include mandatory notification states that are different in importance level (H, M, L) from each other, and this point can apply to the other types B, C, and D. If the vehicle is in a plurality of mandatory notification states belonging to the same type, for this type of mandatory notification states, the notification is made by using a signal sound that is set for the mandatory notification state with the highest importance level. This control preferentially notify the fact that the vehicle is in the state with a particularly high importance level among various mandatory notification states, and enables the driver to more appropriately recognize the mandatory notification states when the vehicle is simultaneously caught in various mandatory notification states.

As to the notification indicating that the vehicle is in the audio notification state, if another new audio notification state occurs during the notification of the audio notification state having occurred earlier, the notification of the audio notification state having occurred earlier is stopped and the notification of the new audio notification state is performed. This control enables the latest audio notification state occurring in the vehicle to be preferentially notified, and can prompt the driver to more accurately recognize the state(s) having occurred in the vehicle while ensuring the capacity required for notifying that the vehicle is in the mandatory notification state(s) or the non-mandatory notification state(s).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 1: vehicular notification apparatus
- 101: controller
- 151: vehicle speed sensor
- 152: forward sonar sensor
- 153: seat belt switch
- 154: shift position sensor
- 155: direction indicator
- 161: alarm
- 162: sound generator
- 201: AEB controller

- 301: LKA controller

## Claims

1. A vehicular notification apparatus (1) comprising:
a vehicle state determination unit (101: B111) configured to determine whether a vehicle is in at least one predetermined state or not; and
a notification unit (101: B112; B113) configured to perform auditory notification for prompting a driver of the vehicle to recognize that the vehicle is in the at least one predetermined state, when the vehicle state determination unit (101: B111) determines that the vehicle is in the at least one predetermined state, wherein:
the at least one predetermined state includes a plurality of types of mandatory notification states and at least one non-mandatory notification state different from the mandatory notification states;
the notification unit (101: B112; B113) is configured to notify that the vehicle is in one of the plurality of types of mandatory notification states, by using signal sounds that are different for each of the plurality of types of mandatory notification states; and
when the vehicle is in two or more types of the mandatory notification states, the notification unit (101: B112; B113) performs notification indicating that the vehicle is in the mandatory notification states, while stopping notification indicating that the vehicle is in the non-mandatory notification state.

2. The vehicular notification apparatus (1) according to claim 1, wherein:
the mandatory notification states are set by being classified into at least two importance levels in each of the plurality of types; and
when the vehicle is in two or more types of the mandatory notification states and the importance levels of the two or more mandatory notification states are high, the notification unit (101: B112; B113) stops notification indicating that the vehicle is in the non-mandatory notification state.

3. The vehicular notification apparatus (1) according to claim 2, wherein the notification unit (101: B112; B113) more increases number of the at least one non-mandatory notification state to be notified as number of types of the mandatory notification states having a high importance level is lower.

4. The vehicular notification apparatus (1) according to any one of claim 1 to claim 3, wherein:
the notification unit (101: B112; B113) is configured to notify that the vehicle is in the mandatory notification states, by using signal sounds that are different for each of importance levels in each of the plurality of types; and
when the vehicle is in a plurality of mandatory notification states belonging to the same type, the notification unit (101: B112; B113) notifies that the vehicle is in the mandatory notification states, by using a signal sound that is set for the mandatory notification state having a highest importance level among the plurality of mandatory notification states belonging to the same type.

5. The vehicular notification apparatus (1) according to any one of claim 1 to claim 4, wherein:
the vehicle state determination unit (101: B111) is configured to determine that the vehicle is in at least one predetermined audio notification state in addition to the at least one predetermined state;
when the vehicle state determination unit (101: B111) determines that the vehicle is in the audio notification state, the notification unit (101: B112; B113) notifies the driver by audible sound that the vehicle is in the audio notification state; and
when the vehicle is in two or more mandatory notification states or when the vehicle is in a plurality of states including both the mandatory notification state and the non-mandatory notification state, the notification unit (101: B112; B113) stops notification by audible sound.

6. The vehicular notification apparatus (1) according to claim 5, wherein:
the at least one predetermined audio notification state includes a plurality of states to be notified by using respective audible sounds different in content from each other; and
the notification unit (101: B112; B113) is configured to prohibit notification indicating that the vehicle is in the audio notification states, when the vehicle is in two or more of the audio notification states.

7. The vehicular notification apparatus (1) according to claim 6, wherein:
the audio notification states include a first audio notification state and a second audio notification state as the plurality of states; and
when the vehicle state determination unit determines that the vehicle is in the second audio notification state during execution of notification indicating that the vehicle is in the first audio notification state, the notification unit (101: B112; B113) stops the notification indicating that the vehicle is in the first audio notification state, and starts notification indicating that the vehicle is in the second audio notification state.

8. The vehicular notification apparatus (1) according to any one of claim 5 to claim 7, wherein, in a case of executing the notification by audible sound, the notification unit (101: B112; B113) lowers sound pressure of the audible sound than sound pressure of the signal sound.

9. The vehicular notification apparatus (1) according to any one of claim 1 to claim 8, wherein:
the mandatory notification states include a first type of state related to a situation in front of the vehicle, a second type of state related to a situation on a side of the vehicle, a third type of state related to the driver, and a fourth type of state related to a traveling speed of the vehicle; and
the notification unit (101: B112; B113) is configured to notify the first to fourth types of states by using signal sounds that are different for each of the first to fourth types.
